# DEMANDE DE BREVET EUROPEEN

(11) **EP 1 895 279 A1**
(43) Date de publication de la demande: **05.03.2008**
(21) Numéro de dépôt: 06405371.3
(22) Date de dépôt: 28.08.2006
(51) Int. Cl.: G01F 11/18

(54) **Dispositif de vanne à voies multiples**

(71) Demandeur: Nestec S.A., 1800 Vevey (CH)
(72) Inventeur: Kissling, Iwan, 2505 Bienne (CH); Thuliez, Jean-Luc, 2525 Le Landeron (CH)
(74) Mandataire: Nithardt, Roland

(57) **Abrégé**

L'invention concerne un dispositif de vanne à voies multiples, notamment pour des appareils électroménagers, comportant un corps creux (11) et un piston mobile (12) axialement monté à l'intérieur de ce corps creux. Le corps (11) est pourvu d'au moins un orifice d'entrée (15) d'un solvant liquide et au moins de deux orifices de sortie (16, 17) de ce solvant. Le piston mobile (12) est couplé avec une tige de dosage (31) à déplacement axial d'un doseur linéaire (30) d'une substance solide, cette tige de dosage (31) étant actionnée par un actionneur mécanique (32) et associée à un ressort de rappel (35). Ce piston mobile (12) est agencé pour se déplacer dans un sens, librement, ou à l'encontre de la poussée du ressort de rappel (35), sous l'effet de la pression du solvant liquide exercée à l'orifice d'entrée (15) sur ce piston mobile (12), et dans le sens opposé, sous l'effet de la poussée exercée sur la tige de dosage (31) par le ressort de rappel (35).

## Description

### Domaine technique

La présente invention concerne un dispositif de vanne à voies multiples ayant un corps creux et un piston mobile axialement monté à l'intérieur dudit corps creux, ce corps comportant au moins un orifice d'entrée d'un solvant liquide et au moins deux orifices de sortie de ce solvant.

### Technique antérieure

Dans de nombreuses applications tant industrielles que domestiques, des équipements automatisés sont conçus pour préparer des solutions à partir de substances solides, par exemple sous la forme de granulés, de poudres, de grains, de particules agglomérées ou similaires, et d'un ou de plusieurs solvants. Pour ces préparations, il est habituellement nécessaire de doser, parfois en poids, mais le plus souvent en volume, les substances solides d'une part, puis de doser le ou les solvants appropriés, d'autre part, également en poids ou plus couramment en volumes et finalement de les acheminer vers un récipient destiné à recevoir les différents composants en vue de la préparation d'un mélange.

Dans des installations de production industrielle, les doseurs de substances solides comportent en général un organe mobile actionné par un vérin ou par le noyau plongeur d'un électroaimant ou par un moteur d'entraînement linéaire ou rotatif ou par tout autre actionneur connu. Dans ce type d'installations les solvants liquides sont habituellement amenés par pompage et leur dosage est effectué par la régulation du débit et l'actionnement de la pompe pendant une durée prédéterminée. L'acheminement vers le récipient d'un ou de plusieurs solvants ou d'un même solvant dans des conditions de température ou de pression différentes, est piloté par des vannes à voies multiples commandées indépendamment. Il est évident que dans ces installations industrielles relativement lourdes, chacun de ces équipements, doseur de composants solides, pompe de solvants liquides et vannes à voies multiples, comporte son propre système d'activation motorisé. La recherche d'un coût et d'un encombrement réduits ne correspond généralement pas à la préoccupation majeure des concepteurs. L'efficacité, la productivité et la fiabilité sont recherchées en priorité.

En revanche, dans des appareils domestiques, notamment des appareils pour le grand public, par exemple les appareils électroménagers, le coût de fabrication des équipements multifonctions constitue la préoccupation essentielle des constructeurs. Or, lorsqu'un équipement doit être capable de doser des substances solides, de doser des liquides et d'acheminer ces liquides à travers une vanne à plusieurs voies, il est nécessaire de disposer d'actionneurs mécanisés susceptibles de mettre en mouvement des organes mobiles différents appartenant respectivement aux composants assumant lesdites fonctions. Ces actionneurs sont relativement coûteux et renchérissent considérablement lesdits équipements s'ils sont indépendants. Les pompes pour acheminer les solvants liquides sont inévitablement pourvues d'un moteur électrique. Les doseurs de substances solides comprennent souvent un actionneur linéaire avec un noyau plongeur attiré à l'intérieur d'un solénoïde lorsqu'on applique une tension électrique à ses bornes. Les vannes à voies multiples comportent habituellement un solénoïde qui déplace un piston dans une direction ou dans la direction opposée. Ce dernier élément est particulièrement coûteux et alourdit sensiblement le prix total d'un équipement multifonctions, complique son assemblage et augmente son encombrement.

### Exposé de l'invention

La présente invention se propose de pallier ces inconvénients en réalisant un dispositif de vanne à voies multiples, pour distribuer un solvant dans un état de température et de pression prédéterminé, combiné avec un dispositif de dosage d'un produit soluble dans ce solvant, ledit dispositif de vanne à voies multiples étant fiable, de construction et d'utilisation économiques et facile à fabriquer et à entretenir.

Ce but est atteint par le dispositif de vanne selon l'invention tel que défini en préambule et caractérisé en ce que ledit piston mobile est couplé avec une tige de dosage à déplacement axial d'un doseur linéaire d'une substance solide constituée de particules divisées, notamment en grains, en granulés, en poudre ou similaire, cette tige de dosage étant actionnée par un actionneur mécanique et associée à un ressort de rappel, et en ce que ledit piston mobile est agencé pour se déplacer dans un sens, librement, ou à l'encontre de la poussée dudit ressort de rappel, sous l'effet de la pression dudit solvant liquide exercée audit orifice d'entrée sur ce piston mobile, et dans le sens opposé, sous l'effet de la poussée exercée sur ladite tige de dosage par ledit ressort de rappel.

Dans un mode de réalisation préféré du dispositif, dans lequel ledit piston mobile comporte une tête de piston et une tige de piston, ladite tête de piston est pourvue d'au moins un canal intérieur agencé pour amener en communication au moins un desdits orifices d'entrée et au moins un desdits orifices de sortie pour une position déterminée dudit piston mobile

Dans un autre mode de réalisation, dans lequel ledit piston mobile comporte une tête de piston et une tige de piston, ladite tête de piston comporte un premier canal intérieur agencé pour amener en communication un premier orifice d'entrée et au moins un desdits orifices de sortie, pour une position déterminée dudit piston mobile, et un deuxième canal intérieur agencé pour amener en communication au moins un deuxième orifice d'entrée et au moins un desdits orifices de sortie pour une autre position déterminée dudit piston mobile.

D'une manière particulièrement avantageuse, ladite tige de dosage est agencée pour coulisser dans un fourreau creux qui porte au moins un réservoir de stockage de ladite substance solide ayant une ouverture de sortie débouchant dans ledit fourreau, cette tige de dosage comportant au moins une gorge périphérique agencée pour réceptionner une dose unitaire de ladite substance solide lorsque ladite tige de stockage est déplacée de manière à positionner cette gorge périphérique en regard de ladite ouverture de sortie du réservoir de stockage.

D'une manière préférentielle, ledit fourreau comporte au moins une ouverture traversante agencée pour permettre le passage d'un gaz, lorsque ladite tige de dosage se trouve dans une position déterminée.

Pour assurer un dosage précis de la substance solide, ladite tige de dosage peut comporter au moins deux gorges périphériques décalées axialement, la distance qui sépare ces deux gorges périphériques étant sensiblement égale à la distance qui sépare ladite ouverture de sortie et ladite du réservoir de stockage et ladite ouverture traversante ménagées dans ledit fourreau.

De façon avantageuse, ladite tige de dosage est couplée à un noyau plongeur de l'actionneur mécanique et comporte une collerette d'appui pour ledit ressort de rappel.

Le corps creux est de préférence fermé, à une de ses extrémités, par un flasque de fermeture et la longueur de la tête de piston peut être telle que ledit premier canal débouche dans le deuxième orifice de sortie lorsque ladite tête de piston est en appui contre ledit flasque de fermeture.

Selon un autre mode de réalisation, la longueur de la tête de piston peut être telle que ledit deuxième canal débouche dans le deuxième orifice de sortie lorsque ladite tête de piston est en appui contre ledit flasque de fermeture.

Avantageusement, le piston mobile, la tige de dosage et le noyau plongeur sont disposés de façon coaxiale.

D'une manière particulièrement avantageuse, la tige de dosage et le noyau plongeur sont réalisés d'une pièce.

### Description sommaire des dessins

La présente invention et ses avantages seront mieux compris à la lecture de la description détaillée de mises en oeuvre préférées du dispositif de l'invention, en référence aux dessins annexés donnés à titre indicatif et non limitatif, dans lesquels :
- la figure 1 est une vue schématique en coupe représentant une première forme de réalisation du dispositif de l'invention dans un premier état de fonctionnement,
- la figure 2 est une vue schématique en coupe représentant la première forme de réalisation du dispositif de l'invention dans un deuxième état de fonctionnement,
- la figure 3 est une vue schématique en coupe représentant la première forme de réalisation du dispositif de l'invention dans un troisième état de fonctionnement,
- la figure 4 est une vue schématique en coupe représentant la première forme de réalisation du dispositif de l'invention dans un quatrième état de fonctionnement,
- la figure 5 est une vue schématique en coupe représentant une deuxième forme de réalisation du dispositif de l'invention dans un premier état de fonctionnement,
- la figure 6 est une vue schématique en coupe représentant la deuxième forme de réalisation du dispositif de l'invention dans un deuxième état de fonctionnement, et
- la figure 7 est une vue schématique en coupe représentant une variante de réalisation du dispositif de l'invention.

### Meilleures manières de réaliser l'invention

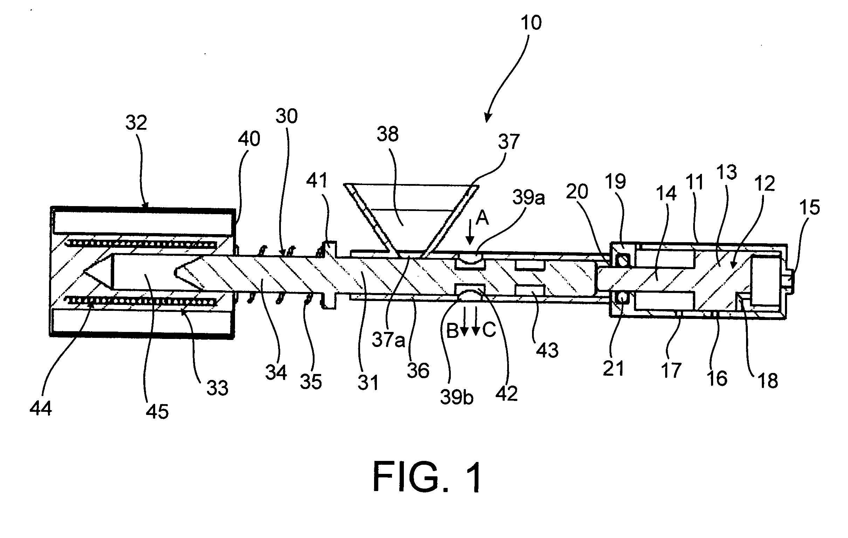

En référence à la figure 1, le dispositif de vanne 10 à voies multiples, tel que représenté, comporte un corps creux 11, de préférence de forme cylindrique dans lequel peut coulisser axialement un piston mobile 12 comprenant une tête de piston 13 et une tige de piston 14 attachée à la tête de piston 13. Dans cet exemple de réalisation, le corps creux 11 est pourvu d'un orifice d'entrée 15 ménagé à une extrémité axiale de ce corps et de deux orifices de sortie, respectivement 16 et 17, ménagés dans la paroi latérale du corps 11. Ladite tête de piston 13 est équipée d'un canal intérieur 18, dont le rôle apparaîtra plus en détail au cours de la description, ce canal étant agencé pour faire communiquer ledit orifice d'entrée 15 avec l'un ou l'autre orifice de sortie 16 ou 17 selon la position du piston 12. Le corps creux comporte par ailleurs un flasque de fermeture 19 pourvu d'une ouverture centrale 20 pour le passage de la tige de piston 14 au cours de son déplacement axial. Un joint torique 21 assure l'étanchéité entre l'ouverture centrale 20 et la tige de piston 14.

Le dispositif de vanne 10 comprend d'autre part un doseur linéaire 30 comprenant une tige de dosage 31 à déplacement axial couplée à un actionneur mécanique 32 comportant de préférence un électroaimant 33 agissant sur un noyau plongeur 34 lié à ladite tige de dosage 31, et un ressort de rappel 35. La tige de dosage 31 cest partiellement logée dans un fourreau 36 dans lequel elle coulisse lorsqu'elle est sollicitée, notamment par l'actionneur mécanique 32 ou par d'autres composants du dispositif, tel que cela sera décrit plus en détail par la suite. Un réservoir de stockage, sous la forme d'une trémie 37 est monté sur le fourreau 36 pour contenir une substance solide 38 qui peut se présenter sous la forme de particules divisées, notamment de grains, de granulés agglomérés, de poudre ou similaire. Cette trémie 37 comporte une ouverture de sortie 37a de la substance solide 38 contenue dans la trémie 37, qui débouche dans le fourreau 36, cette ouverture de sortie 37a permettant de faire communiquer l'intérieur de la trémie 37 avec l'intérieur du fourreau 36. Le fourreau 36 comporte par ailleurs une ouverture traversante comprenant en fait deux ouvertures, respectivement supérieure 39a et inférieure 39b qui sont disposées à l'opposé l'une de l'autre pour permettre soit le passage de l'air, soit le passage de la substance solide 38 ou le passage simultané de l'air et de la substance solide 38, comme cela sera décrit par la suite. La distance entre l'ouverture de sortie 37a et l'ouverture traversante 39a, 39b est déterminée de façon précise en fonction de le la géométrie de certaines parties de la tige de dosage.

Le ressort de rappel 35 est, dans l'exemple représenté, un ressort spiral monté coaxialement sur le noyau plongeur 34 et qui se trouve en appui d'une part sur un flanc frontal 40 de l'actionneur mécanique 32 et d'autre part sur une collerette d'appui 41 protubérante, disposée radialement par rapport audit noyau plongeur 34 ou à ladite tige de dosage 31. Cette tige de dosage 31 est avantageusement réalisée d'une pièce avec ledit noyau plongeur 34 et disposée dans le prolongement axial de ce dernier.

La tige de dosage 31 comporte deux gorges périphériques respectivement 42 et 43 décalées axialement et dont le rôle sera expliqué ci-après. Pour des raisons qui apparaîtront clairement dans la description qui va suivre, la distance entre les deux gorges périphériques 42 et 43 est sensiblement égale à la distance qui sépare l'ouverture de sortie 37a de la trémie 37 de l'ouverture traversante 39a, 39b du fourreau 36.

L'actionneur mécanique 32 à noyau plongeur 34 est du type connu et son électroaimant 33 comporte au moins un solénoïde 44 raccordé à une source d'énergie électrique (non représentée) agencée pour créer un champ magnétique afin de provoquer le déplacement axial du noyau plongeur 34 à l'intérieur de son logement central 45. Ce déplacement a pour effet d'entraîner la tige de dosage 31 et de comprimer le ressort de rappel 35.

Les différentes séquences de fonctionnement de cette forme de réalisation du dispositif de l'invention seront décrites ci-dessous en détail en référence aux figures 1 à 4.

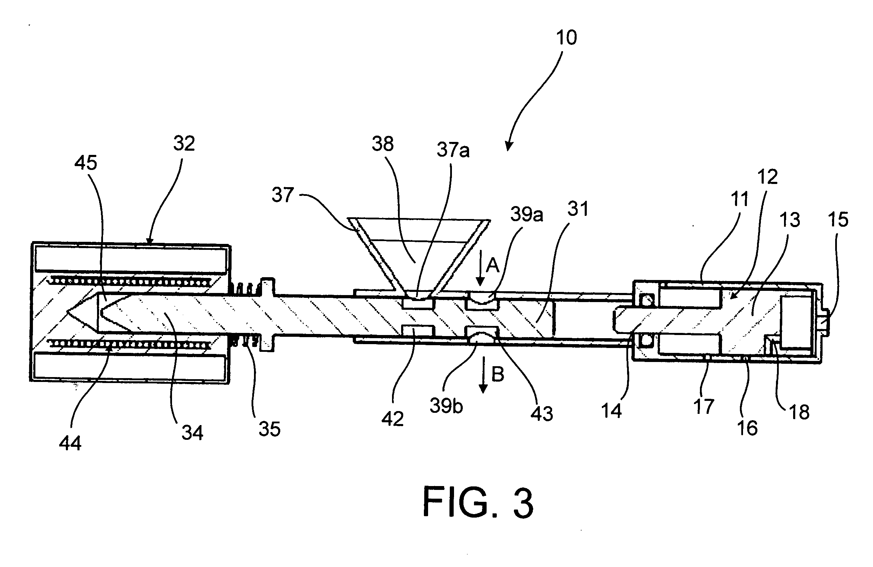

La figure 1 montre le dispositif dans sa phase initiale. Aucune pression n'est exercée par le solvant (non représenté) à l'orifice d'entrée 15 sur le piston mobile 12 qui se trouve en appui contre l'extrémité du corps creux 11. Le solénoïde 44 de l'actionneur mécanique 32 n'est pas alimenté, de sorte que le noyau plongeur 34 n'est pas attiré à l'intérieur de son logement 45 et que la tige de dosage 31 n'est soumise qu'à la force de poussée du ressort de rappel 35 qui la sollicite en appui contre l'extrémité de la tige de piston 14 du piston 12. Dans cette position, la trémie 37 est fermée et aucune substance solide 38 ne peut être évacuée par son ouverture inférieure 37a. Les orifices de sortie 16 et 17 sont obturés de sorte qu'aucun solvant liquide ne peut s'en écouler. Toutefois, la gorge périphérique 42 est disposée en regard de l'ouverture traversante 39a, 39b ménagée dans le fourreau 36, de sorte qu'une dose de substance solide 38, qui a été préalablement prélevée du contenu de la trémie 37 peut s'écouler librement dans un récipient récepteur (non représenté). La phase de préparation de la dose unitaire de substance solide sera décrite en référence à la figure 3. L'ouverture supérieure 39a communique avec l'air libre ou avec de l'air ou un autre gaz sous pression amené par un conduit (non représenté) comme le montre la flèche A. Cet air ou ce gaz traverse la gorge périphérique 42 contenant initialement la dose unitaire de substance solide 38 et s'évacue par l'ouverture inférieure 39b comme le montre la flèche B. La substance solide de la dose unitaire contenue dans la gorge périphérique 42 est également évacuée par l'ouverture inférieure 39b, comme le montre la flèche C.

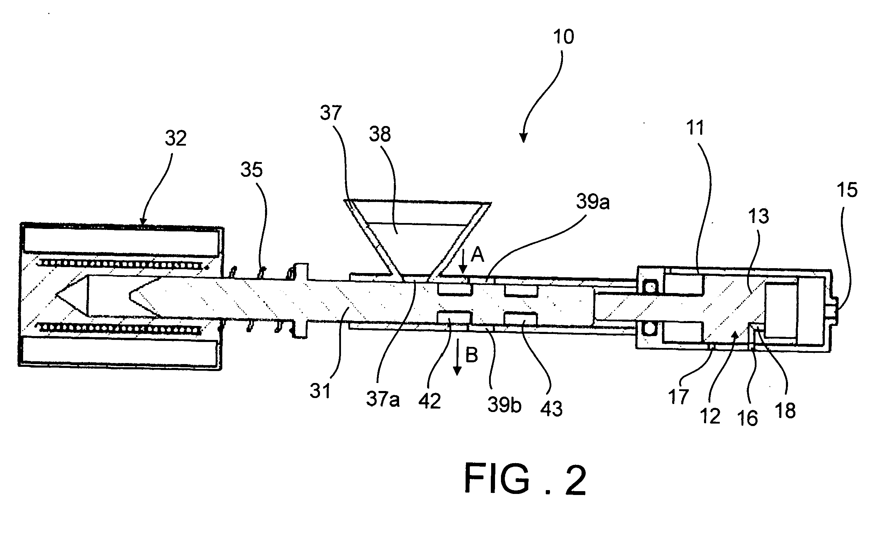

La figure 2 montre le dispositif dans une première phase opératoire. Le solvant qui est amené à l'orifice d'entrée 15 par un conduit traditionnel (non représenté) exerce une pression déterminée à cet orifice d'entrée 15 qui se traduit par une force de poussée sur le piston 12. Cette force est opposée à celle exercée par le ressort de rappel 35 par l'intermédiaire de la tige de dosage 31 et a pour effet de repousser le piston de telle manière que le canal 18 se positionne en regard de l'orifice de sortie 16, ce qui met en communication la source de solvant (non représentée) avec un récipient récepteur (non représenté) dans lequel s'écoule le solvant provenant de l'orifice de sortie 16 sous une pression et à une température données. La température souhaitée peut être obtenue par des moyens classiques de chauffage ou de réfrigération (non représentés) en amont de l'orifice d'entrée 15. La pression est générée par une pompe d'alimentation classique (non représentée) disposée entre la source de solvant et l'orifice d'entrée 15. Dans cet état, le dispositif 10 distribue du solvant aux conditions de température et de pressions souhaitées. En revanche, le doseur 30 reste inopérant puisque la tige de dosage 31, bien qu'elle ait été repoussée partiellement, ne s'est pas déplacée suffisamment pour que la gorge périphérique 42 soit amenée sous l'ouverture de sortie de la trémie 37. On constate néanmoins que l'air peut passer dans cette gorge comme le montrent les flèches A et B, ce qui correspond également à l'état illustré par la figure 1.

La figure 3 correspond à un troisième état du dispositif dans lequel la substance solide 38 est dosée. Dans un premier temps, la pression du solvant est relâchée à l'orifice d'entrée 15, ce qui engendre une poussée axiale du ressort de rappel 35 qui, par l'intermédiaire de la tige de dosage 31, sur la tige du piston 14 de sorte que la tête de piston 13 est poussée en butée, obture l'orifice d'entrée 15 et ferme l'orifice de sortie 16. Dans un deuxième temps, le solénoïde 44 est alimenté en énergie électrique et active le noyau plongeur 34 en l'attirant dans son logement 45. Il comprime le ressort de rappel 35 qui accumule de l'énergie mécanique susceptible d'être relâchée dans la séquence décrite en référence à la figure 1. Il entraîne la tige de dosage 31 de telle manière que la gorge périphérique 42 se positionne sous l'ouverture de sortie 37a de la trémie 37 et se remplit de substance solide 38. Cette gorge définit une cavité qui correspond à un volume de substance à doser, c'est-à-dire à une dose unitaire de cette substance. A la fin de cette séquence, la dose est prélevée, mais elle reste confinée dans la gorge périphérique 42. L'air ou le gaz continue à passer par les ouvertures 39a et 39b de l'ouverture traversante du fourreau 36, comme le montrent les flèches A et B

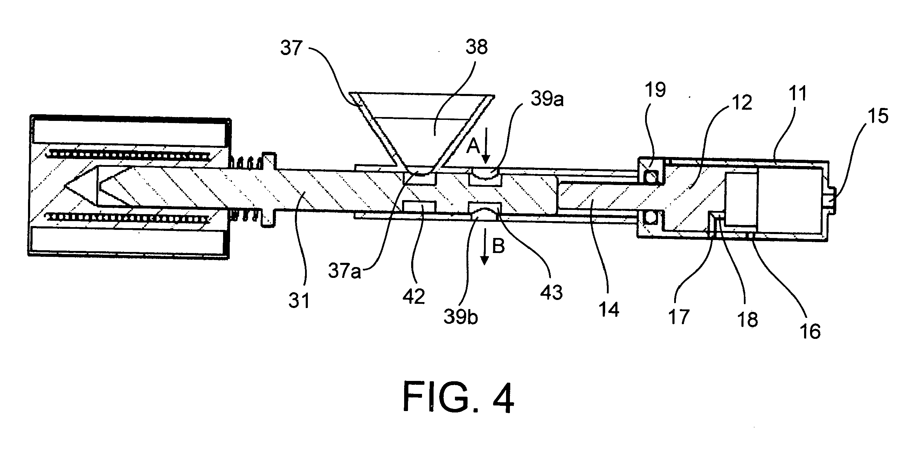

La figure 4 correspond à un quatrième état du dispositif dans lequel le solvant est injecté, sous des conditions de température et/ou de pression déterminées, dans la solution préparée au cours des phases précédentes par addition de solvant issu de l'orifice de sortie 16 à une dose de substance prélevée au moyen de la tige de dosage 31 et évacuée par l'ouverture inférieure 39b ménagée dans le fourreau 36, le tout étant amené par des moyens classiques dans un récipient (non représenté). Au cours de cette phase, la tige de dosage 31 reste dans la position de la phase précédente représentée par la figure 3. En revanche, le solvant applique une pression sur l'orifice d'entrée 15 qui a pour effet de repousser le piston 12 en butée contre le flasque de fermeture 19, l'extrémité de la tige de piston 14 venant en butée contre l'extrémité disposée en regard de la tige de dosage 31. Dans cette position, le canal 18 met en communication l'orifice d'entrée 15 avec le deuxième orifice de sortie 17, le premier orifice de sortie 16 étant obturé. La pression du solvant peut par exemple être plus élevée et la sortie peut par exemple avoir une section plus réduite de manière à générer un jet destiné à effectuer un brassage du mélange en vue d'assurer une meilleure homogénéité de ce mélange. L'air ou un gaz sous pression continue à passer par l'ouverture traversante 39a, 39b.

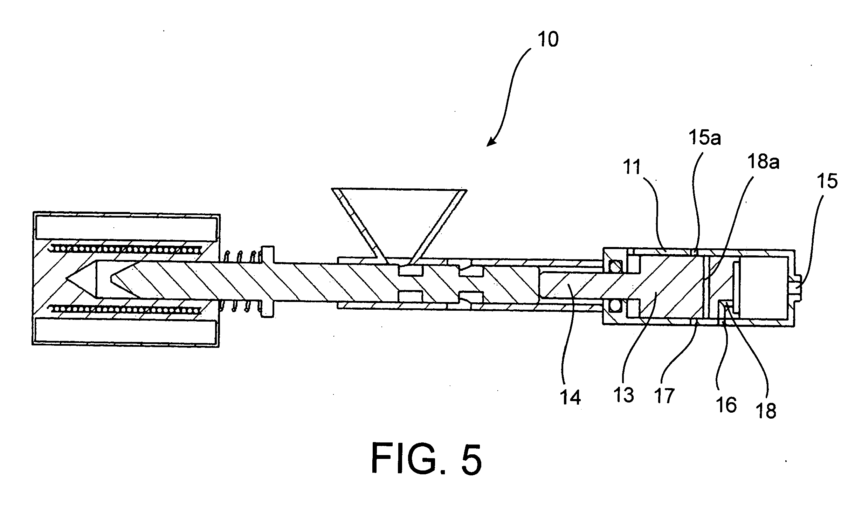

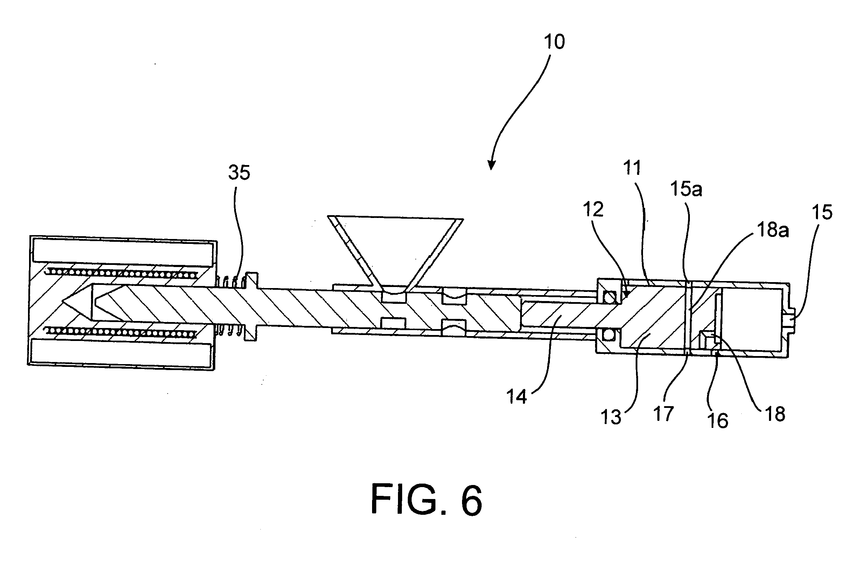

En référence aux figures 5 et 6, le dispositif de vanne 10 à voies multiples tel que représenté comporte comme précédemment un corps creux 11, de préférence de forme cylindrique dans lequel peut coulisser axialement un piston 12 comprenant une tête de piston 13 et une tige de piston 14 attachée à la tête de piston 13. La forme et les fonctions de ces composants sont sensiblement les mêmes que celles de l'exemple décrit ci-dessus. Toutefois, dans cette réalisation, ladite tête de piston 13 est équipée d'un premier canal 18, sensiblement identique à celui des figures 1 à 4 et un deuxième canal traversant 18a dont la fonction sera expliquée ci-après. Alors que le premier canal intérieur 18 est conçu pour être raccordé à une première source de solvant connectée à un premier orifice d'entrée 15, et peut délivrer ce solvant sous des conditions de température et de pression différentes aux deux orifices de sortie 16 et 17, le deuxième canal traversant 18a est conçu pour être raccordé à une deuxième source de solvant connectée à un deuxième orifice d'entrée 15a et peut délivrer un deuxième solvant à l'orifice de sortie 17. A cet effet, on notera que, dans la réalisation représentée, le deuxième orifice d'entrée 15a se trouve en regard du deuxième orifice de sortie 17, parce que le deuxième canal 18a est rectiligne. Il est évident que les deux orifices 15a et 17 pourraient être positionnés différemment si le canal 18a avait un autre profil. Cette réalisation permet d'adapter le dispositif à des applications plus larges puisqu'elle autorise d'une manière très simple l'utilisation de deux solvants différents.

La figure 5 correspond à l'état représenté par la figure 2 dans laquelle l'orifice d'entrée 15 est en communication avec l'orifice de sortie 16. Dans cette réalisation le premier solvant peut être amené dans le récipient (non représenté) du mélange.

La figure 6 correspond à une séquence suivante, dans laquelle la pression du premier solvant à l'orifice d'entrée 15 a été augmentée de manière à exercer une force supplémentaire sur le piston 12 qui est repoussé, en comprimant d'avantage le ressort de rappel 35, jusqu'à une position dans laquelle le deuxième canal traversant 18a relie les orifices d'entrée 15a et de sortie 17. Le deuxième solvant peut alors être délivré.

Les autres phases opératoires sont sensiblement identiques à celles décrites en référence aux figures 1 à 4.

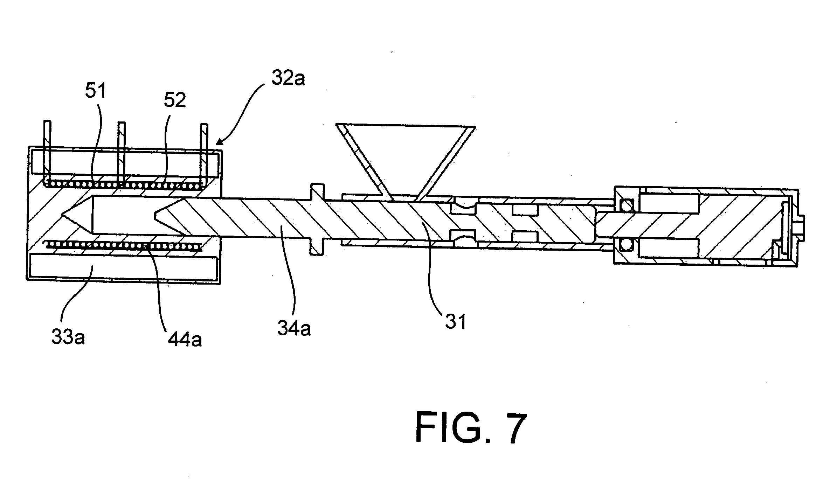

La figure 7 représente une variante dans laquelle le solénoïde 44a de l'électroaimant 33a de l'actionneur mécanique 32a à noyau plongeur 34a est réalisé selon une construction différente de celle du solénoïde 44 représenté par les figures 1 à 6. Dans cet exemple de réalisation, le solénoïde est composé de deux bobinages 51 et 52 qui peuvent être alimentés indépendamment ou simultanément. Cette construction permet de moduler le déplacement du noyau plongeur 34a et par conséquent de la tige de dosage 31 qui lui est attachée. L'amplitude des mouvements peut être variée ainsi que la force appliquée en fonction des applications du dispositif.

On notera que le nombre des orifices d'entrée, le nombre des orifices de sortie ainsi que le nombre des canaux, de préférence ménagés à l'intérieur de la tête du piston mobile, ne sont pas limités. Si certaines applications nécessitent le recours à plusieurs solvants, le nombre des entrées peut être adapté en conséquence, de même que le nombre des sorties qui dépend en outre de paramètres, par exemple de température et de pression des solvants auxquels on ajoutera la ou les substances solides. En ce qui concerne les substances solides également, la trémie pourrait être remplacée par plusieurs trémies contenant des substances différentes ou la même substance dans des états différents. Dans ce cas, il est évident que la tige de dosage devrait être adaptée en conséquence et que le nombre des gorges périphériques devrait, le cas échéant, être augmenté.

Toutes ces modifications ne sortent pas du champ de la présente invention, parce qu'elles appliquent le principe de base qui consiste à réduire le nombre des mécanismes d'actionnement permettant de réaliser le ou les mélanges, les forces utilisées se réduisant à celles générées par la pression appliquée par un solvant sur la surface de la tête du piston et celle exercée par un ressort de rappel mis en compression par un actionneur mécanique à électroaimant.

### Possibilités d'application industrielle

Le dispositif décrit ci-dessus trouve de nombreuses applications dans des appareils qui effectuent automatiquement un mélange d'une substance solide se présentant sous la forme de particules divisées, en granulés, en poudre, sous forme d'éléments divers agglomérés et similaires et d'au moins un solvant qui peut être de l'eau, ou toute autre substance appropriée. Ces appareils peuvent être du type domestique, tels que par exemple des machines permettant de préparer des boissons, ou des préparations pour des travaux domestiques, telles que des peintures, des solutions de nettoyage à partir de granulés secs et de solvants ou de mélanges de solvants adaptés. Ces appareils peuvent aussi être de type industriel et le dispositif décrit peut s'intégrer dans une installation dans laquelle sa fonction consiste à gérer un processus de préparation d'une solution de divers produits.

## Revendications

1. Dispositif de vanne à voies multiples ayant un corps creux (11) et un piston mobile (12) axialement monté à l'intérieur dudit corps creux, ce corps comportant au moins un orifice d'entrée d'un solvant liquide et au moins deux orifices de sortie (16, 17) de ce solvant, **caractérisé en ce que** ledit piston mobile (12) est couplé avec une tige de dosage (31) à déplacement axial d'un doseur linéaire d'une substance solide constituée de particules divisées, notamment en grains, en granulés, en poudre ou similaire, cette tige de dosage (31) étant actionnée par un actionneur mécanique (32; 32a) et associée à un ressort de rappel (35), et **en ce que** ledit piston mobile (12) est agencé pour se déplacer dans un sens, librement, ou à l'encontre de la poussée dudit ressort de rappel (35), sous l'effet de la pression dudit solvant liquide exercée audit orifice d'entrée (15) sur ce piston mobile (12), et dans le sens opposé, sous l'effet de la poussée exercée sur ladite tige de dosage (31) par ledit ressort de rappel (35).

2. Dispositif de vanne selon la revendication 1, dans lequel ledit piston mobile (12) comporte une tête de piston (13) et une tige de piston (14), **caractérisé en ce que** ladite tête de piston (13) est pourvue d'au moins un canal intérieur (18) agencé pour amener en communication au moins un orifice d'entrée (15) et au moins un desdits orifices de sortie (16, 17) pour une position déterminée dudit piston mobile (12).

3. Dispositif de vanne selon la revendication 1, dans lequel ledit piston mobile (12) comporte une tête de piston (13) et une tige de piston (14), **caractérisé en ce que** ladite tête de piston (13) comporte un premier canal intérieur (18) agencé pour amener en communication un premier orifice d'entrée (15) et au moins un desdits orifices de sortie (16 ou 17) pour une position déterminée dudit piston mobile (12), et un deuxième canal intérieur (18a) agencé amener en communication au moins un deuxième orifice d'entrée (15a) et au moins un desdits orifices de sortie (17) pour une autre position déterminée dudit piston mobile (12).

4. Dispositif de vanne selon la revendication 1, **caractérisé en ce que** ladite tige de dosage (31) est agencée pour coulisser dans un fourreau creux (36) qui porte au moins un réservoir de stockage (37) de ladite substance solide (38) ayant une ouverture de sortie (37a) débouchant dans ledit fourreau (36), cette tige de dosage (31) comportant au moins une gorge périphérique (42) agencée pour réceptionner une dose unitaire de ladite substance solide (38) lorsque ladite tige de dosage (31) est déplacée de manière à positionner cette gorge périphérique (42) en regard de ladite ouverture de sortie (37a).

5. Dispositif de vanne selon la revendication 4, **caractérisé en ce que** ledit fourreau (36) comporte au moins une ouverture traversante (39a, 39b) agencée pour permettre le passage d'un gaz, lorsque ladite tige de dosage (31) se trouve dans une position déterminée.

6. Dispositif de vanne selon les revendications 3 et 4, **caractérisé en ce que** ladite tige de dosage (31) comporte au moins deux gorges périphériques (42, 43) décalées axialement, la distance qui sépare les deux gorges périphériques (42, 43) étant sensiblement égale à la distance qui sépare ladite ouverture de sortie (37a) du réservoir de stockage et ladite ouverture traversante (39a, 39b) du fourreau (36).

7. Dispositif de vanne selon la revendication 1, **caractérisé en ce que** ladite tige de dosage (31) est couplée à un noyau plongeur (34) de l'actionneur mécanique (32) et comporte une collerette d'appui (41) pour ledit ressort de rappel (35).

8. Dispositif de vanne selon la revendication 2, dans lequel le corps creux (11) est fermé, à une de ses extrémités, par un flasque de fermeture (19), **caractérisé en ce que** la longueur de la tête de piston (13) est telle que ledit premier canal (18) débouche dans le deuxième orifice de sortie (17) lorsque ladite tête de piston est en appui contre ledit flasque de fermeture (19).

9. Dispositif de vanne selon la revendication 3, dans lequel le corps creux (11) est fermé, à une de ses extrémités, par un flasque de fermeture (19), **caractérisé en ce que** la longueur de la tête de piston (13) est telle que ledit deuxième canal (18a) débouche dans le deuxième orifice de sortie (17) lorsque ladite tête de piston est en appui contre ledit flasque de fermeture (19).

10. Dispositif de vanne selon la revendication 1, **caractérisé en ce que** le piston mobile (12), la tige de dosage (31) et le noyau plongeur (34) sont disposés de façon coaxiale.

11. Dispositif de vanne selon la revendication 10, **caractérisé en ce que** la tige de dosage (31) et le noyau plongeur (34) sont réalisés d'une pièce.
